(19) Europäisches Patentamt / European Patent Office / Office européen des brevets

(11) EP 3 616 516 A1

(12) EUROPEAN PATENT APPLICATION

(43) Date of publication:
04.03.2020 Bulletin 2020/10

(21) Application number: 19194261.4

(22) Date of filing: 29.08.2019

(51) Int Cl.:
A01N 43/713 (2006.01)
A01N 37/52 (2006.01)
A01N 25/00 (2006.01)
A01P 3/00 (2006.01)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 31.08.2018 JP 2018162636

(71) Applicant: SUMITOMO CHEMICAL COMPANY, LIMITED
Chuo-ku,
Tokyo 104-8260 (JP)

(72) Inventor: SUEMOTO, Haruka
Takarazuka-shi, Hyogo 665-8555 (JP)

(74) Representative: Winter, Brandl, Fürniss, Hübner, Röss, Kaiser, Polte - Partnerschaft mbB
Patent- und Rechtsanwaltskanzlei
Alois-Steinecker-Strasse 22
85354 Freising (DE)

# (54) COMPOSITION FOR CONTROLLING PLANT DISEASES AND METHOD FOR CONTROLLING PLANT DISEASES

(57) The present invention provides a composition for controlling a plant disease comprising a compound represented by formula (1):

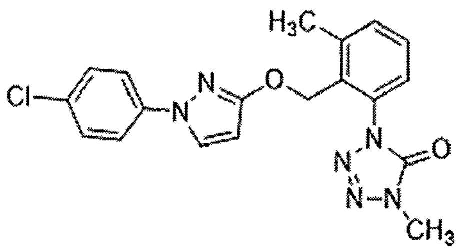

(1)

and a compound represented by formula (2):

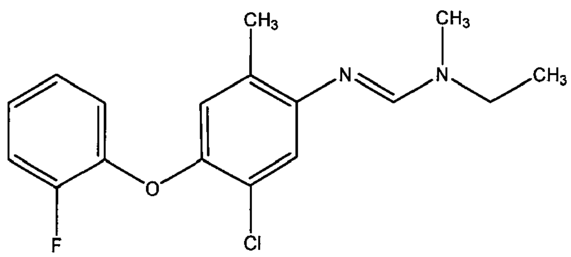

(2)

,

and also a method for controlling a plant disease comprising a step of applying each of an effective amount of the compound represented by the formula (1) and the compound represented by the formula (2) to a plant or a soil for cultivating the plant, each having excellent control effect on plant diseases.

EP 3 616 516 A1

## Description

TECHNICAL FIELD

This application claims priority to and the benefit of Japanese Patent Application No. 2018-162636 filed on August 31, 2018, the entire contents of which are incorporated herein by reference.
The present invention relates to a composition for controlling plant diseases and a method for controlling plant diseases.

BACKGROUND ART

Conventionally, various compounds have been known as an active ingredient for a composition for controlling plant diseases (for example, see patent documents 1 and 2).

CITATION LIST

PATENT DOCUMENT

Patent Document 1: JP Patent Publication No. 2014-080415 A
Patent Document 2: WO 2016/202688 A1

SUMMARY OF THE INVENTION

(PROBLEMS TO BE SOLVED BY INVENTION)

An object of the present invention is to provide a composition and a method for controlling plant diseases, each having excellent control effect on plant diseases.

(MEANS TO SOLVE PROBLEMS)

The present inventor has intensively studied a composition and a method for controlling plant diseases, each having excellent control effect on plant diseases, and found that a composition comprising a compound represented by the following formula (1) and a compound represented by the following formula (2) has excellent control effect on plant diseases.
The present invention is as follows.

[1] A composition for controlling a plant disease comprising a compound represented by formula (1):

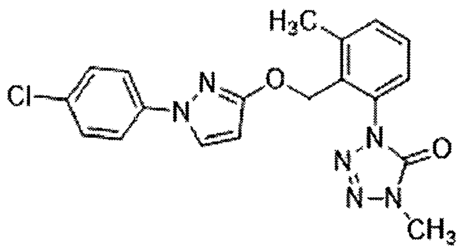

(1)

and a compound represented by formula (2):

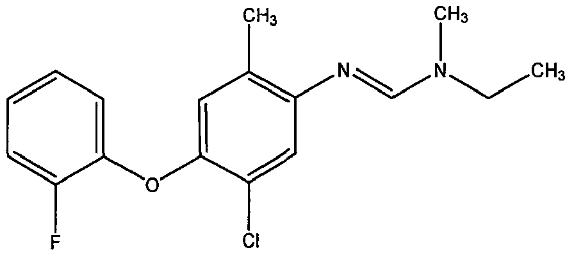

(2)

.

[2] The composition according to the above [1], wherein a weight ratio of the compound represented by formula (1) to the compound represented by formula (2) is within a range of 1:0.0125 to 1:500.

[3] A method for controlling a plant disease comprising a step of applying each of an effective amount of a compound represented by formula (1):

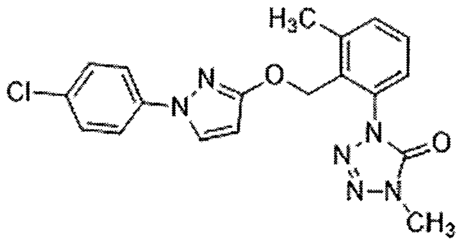

(1)

and a compound represented by formula (2):

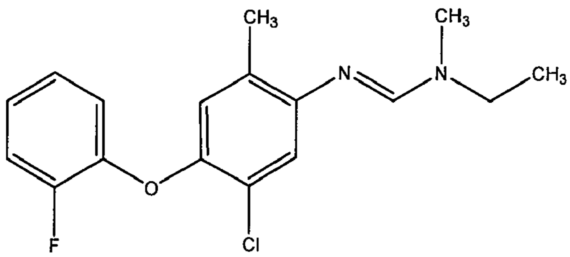

(2)

to a plant or a soil for cultivating the plant.

[4] A method for controlling a plant disease comprising a step of applying each of an effective amount of a compound represented by formula (1):

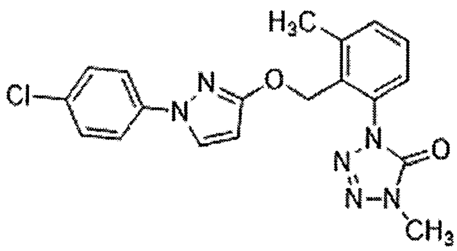

(1)

and a compound represented by formula (2):

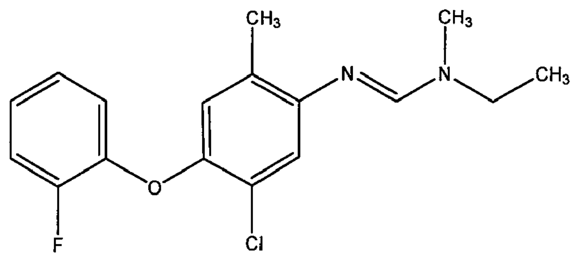

(2)

to a seed.

[5] A use of a combination of a compound represented by formula (1):

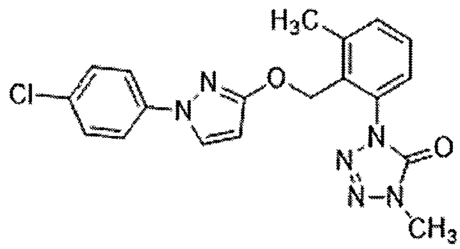

(1)

and a compound represented by formula (2):

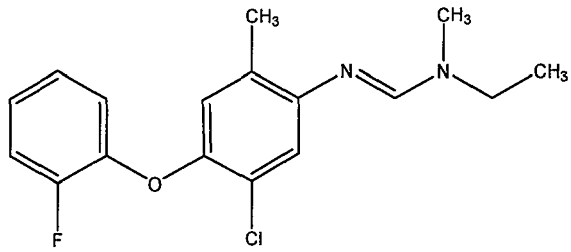

(2)

.

(EFFECT OF INVENTION)

The present invention can control plant diseases.

MODE FOR CARRYING OUT THE INVENTION

The composition for controlling a plant disease of the present invention (hereinafter, referred to as "Composition of the present invention") comprises the compound represented by the above formula (1) (hereinafter, referred to as "Present compound 1") and the compound represented by the above formula (2) (hereinafter, referred to as "Present compound 2") .

At first, the present compound 1 is described below.

The present compound 1 is, for example, a compound described in JP Patent Publication No. 2014-080415 A, and can be prepared according to the method described therein.

Then, the present compound 2 is described below.

The present compound 2 is, for example, a compound described in WO 2016/202688 A1, and can be prepared according to the method described therein.

A weight ratio of the present compound 1 to the present compound 2 in the composition of the present invention is within a range of usually 1:0.0125 to 1:500, preferably 1:0.025 to 1:100 and more preferably 1:0.1 to 1:10, but is not limited thereto.

Although the composition of the present invention may be a mixture as itself of the present compound 1 and the present compound 2, the composition of the present invention is usually a formulation obtained by mixing the present compound 1, the present compound 2 and an inert carrier, and if necessary, adding a surfactant and other auxiliary agents for formulation, and then formulating into oil solutions, emulsifiable concentrates, flowables, wettable powders, water dispersible granules, powders, granules and the others. Such formulations can be used as an agent for controlling

plant diseases as itself or with an addition of the other inert ingredients.

The composition of the present invention contains a range of usually 0.1 to 99 % by weight, preferably 0.2 to 90 % by weight and more preferably 1 to 80 % by weight of the present compound 1 and the present compound 2 in total.

Examples of the inert carrier to be used in the formulation include a solid carrier and a liquid carrier. Examples of the solid carrier include fine powders or granules consisting of minerals (for example, kaolin clay, attapulgite clay, bentonite, montmorillonite, acid white clay, pyrophyllite, talc, diatomaceous earth, or calcite), natural organic substances (for example, corncob powder, or walnut shell powder), synthetic organic substances (for example, urea), salts (for example, calcium carbonate, or ammonium sulfate), and synthetic inorganic substances (for example, synthetic hydrous silicon oxide, or white carbon). Also, examples of the liquid carrier include aromatic hydrocarbons (for example, xylene, alkylbenzene, or methylnaphthalene), alcohols (for example, 2-propanol, ethylene glycol, propylene glycol, or ethylene glycol monoethyl ether), ketones (for example, acetone, cyclohexanone, or isophorone), vegetable oils (for example, soybean oil, or cotton oil), petroleum-derived aliphatic hydrocarbons, esters, dimethylsulfoxide, acetonitrile and water.

Examples of the surfactant include anionic surfactant (for example, alkyl sulfate ester salt, alkylaryl sulfonate salt, dialkylsulfosuccinate salt, polyoxyethylene alkylaryl ether phosphate salt, lignin sulfonate salt, polyoxyethylene alkyl ether sulfate ammonium salt, or naphthalene sulfonate formaldehyde polycondensation), nonionic surfactant (for example, polyoxyethylene alkylaryl ether (such as polyoxyethylene styrenated phenyl ether), polyoxyethylene alkyl polyoxypropylene block copolymer, or sorbitan fatty acid ester), and cationic surfactant (for example, alkyltrimethyl ammonium salt).

Examples of the other auxiliary agents for formulation include water-soluble polymer (for example, polyvinyl alcohol, or polyvinyl pyrrolidone), polysaccharides (for example, arabic gum, alginic acid and salt thereof, CMC (carboxymethylcellulose), or xanthan gum), inorganic substances (for example, aluminum magnesium silicate, or alumina sol), antiseptic agent, colorant, and stabilizers (for example, PAP (acidic isopropyl phosphate), or BHT (dibutyl-hydroxytoluene)).

The composition of the present invention may be also prepared by formulating the present compound 1 and the present compound 2 respectively into separate formulations according to the above-mentioned procedures, and if necessary, diluting each of them with water, and mixing each of the separately-prepared formulations, or each of the diluted solutions thereof.

The composition of the present invention may further contain one or more other fungicides and/or insecticides.

The composition of the present invention can be applied to a plant or soil for cultivating the plant to control the plant diseases.

Examples of the plant diseases on which the present invention can control include the following diseases, which is not limited thereto.

Rice diseases: blast (Magnaporthe grisea), brown spot (Cochliobolus miyabeanus), sheath blight (Rhizoctonia solani), and bakanae disease (Gibberella fujikuroi);

Wheat diseases: powdery mildew (Erysiphe graminis), fusarium blight (Fusarium graminearum, F. avenacerum, F. culmorum, Microdochium nivale), rust (Puccinia striiformis, P. graminis, P. recondita, P. triticina), snow mold (Microdochium nivale), typhula snow blight (Typhula sp.), loose smut (Ustilago tritici), stinking smut (Tilletia caries), eyespot (Pseudocercosporella herpotrichoides), leaf blotch (Mycosphaerella graminicola (Zymoseptoria tritici)), glume blotch (Stagonospora nodorum), and tan spot (Pyrenophora tritici-repentis);

Barley diseases: powdery mildew (Erysiphe graminis), fusarium blight (Fusarium graminearum, F. avenacerum, F. culmorum, Microdochium nivale), rust (Puccinia striiformis, P. graminis, P. hordei), loose smut (Ustilago nuda), scald (Rhynchosporium secalis), net blotch (Pyrenophora teres), spot blotch (Cochliobolus sativus), leaf stripe (Pyrenophora graminea), and damping-off caused by rhizoctonia fungus (Rhizoctonia solani); and

Corn diseases: smut (Ustilago maydis), leaf spot (Cochliobolus heterostrophus), zonate leaf spot (Gloeocercospora sorghi), southern rust (Puccinia polysora), gray leaf spot (Cercospora zeae-maydis), and damping-off caused by rhizoctonia fungus (Rhizoctonia solani).

Citrus diseases: melanose (Diaporthe citri), scab (Elsinoe fawcetti), green mold (Penicillium digitatum, P. italicum), and phytophthora disease (Phytophthora parasitica, Phytophthora citrophthora);

Apple diseases: blossom blight (Monilinia mali), valsa canker (Valsa ceratosperma), powdery mildew (Podosphaera leucotricha), Alternaria leaf spot (Alternaria alternata apple pathotype), scab (Venturia inaequalis), bitter rot (Colletotrichum acutatum), and crown rot (Phytophtora cactorum) ;

Pear diseases: scab (Venturia nashicola, V. pirina), black spot (Alternaria alternata Japanese pear pathotype), rust (Gymnosporangium haraeanum), phytophthora fruit rot (Phytophtora cactorum), and brown spot (Stemphilium vesicarium) ;

Peach diseases: brown rot (Monilinia fructicola), scab (Cladosporium carpophilum), and phomopsis rot (Phomopsis sp.);

Grapes diseases: anthracnose (Elsinoe ampelina), ripe rot (Glomerella cingulata), powdery mildew (Uncinula necator), rust (Phakopsora ampelopsidis), black rot (Guignardia bidwellii), and downy mildew (Plasmopara viticola);

Diseases of Japanese persimmon: anthracnose (Gloeosporium kaki), and leaf spot (Cercospora kaki, Mycosphaerella

nawae);

Diseases of gourd family: anthracnose (Colletotrichum lagenarium), powdery mildew (Sphaerotheca fuliginea), gummy stem blight (Mycosphaerella melonis), fusarium wilt (Fusarium oxysporum), downy mildew (Pseudoperonospora cubensis), Phytophthora rot (Phytophthora sp.), and damping-off (Pythium sp.);

Tomato diseases: early blight (Alternaria solani), leaf mold (Cladosporium fulvum), and late blight (Phytophthora infestans);

Eggplant diseases: brown spot (Phomopsis vexans), and powdery mildew (Erysiphe cichoracearum);

Diseases of brassica family: alternaria leaf spot (Alternaria japonica), white spot (Cercosporella brassicae), clubroot (Plasmodiophora brassicae), and downy mildew (Peronospora parasitica); and

Welsh onion disease: rust (Puccinia allii), and downy mildew (Peronospora destructor).

Soybean diseases: purple stain (Cercospora kikuchii), sphaceloma scab (Elsinoe glycines), pod and stem blight (Diaporthe phaseolorum var. sojae), septoria brown spot (Septoria glycines), cercospora leaf spot (Cercospora sojina), rust (Phakopsora pachyrhizi), phytophthora root and stem rot (Phytophthora sojae), damping-off caused by rhizoctonia fungus (Rhizoctonia solani), target spot (Corynespora cassiicola), and stem rot (Sclerotinia sclerotiorum);

Kidney bean diseases: anthracnose (Colletotrichum lindemuthianum);

Peanut diseases: leaf spot (Cercospora personata), brown leaf spot (Cercospora arachidicola), and southern blight (Sclerotium rolfsii);

Garden pea diseases: powdery mildew (Erysiphe pisi);

Potato diseases: early blight (Alternaria solani), late blight (Phytophthora infestans), pink rot (Phytophthora erythroseptica), and powdery scab (Spongospora subterranean f. sp. subterranea);

Strawberry diseases: powdery mildew (Sphaerotheca humuli), and anthracnose (Glomerella cingulata);

Tea diseases: net blister blight (Exobasidium reticulatum), white scab (Elsinoe leucospila), gray blight (Pestalotiopsis sp.), and anthracnose (Colletotrichum theae-sinensis);

Tobacco diseases: brown spot (Alternaria longipes), powdery mildew (Erysiphe cichoracearum), anthracnose (Colletotrichum tabacum), downy mildew (Peronospora tabacina), and black shank (Phytophthora nicotianae);

Rapeseed diseases: sclerotinia rot (Sclerotinia sclerotiorum), and damping-off caused by rhizoctonia fungus (Rhizoctonia solani);

Cotton diseases: damping-off caused by rhizoctonia fungus (Rhizoctonia solani);

Sugar beet diseases: cercospora leaf spot (Cercospora beticola), leaf blight (Thanatephorus cucumeris), root rot (Thanatephorus cucumeris), and aphanomyces root rot (Aphanomyces cochlioides);

Rose diseases: black spot (Diplocarpon rosae), powdery mildew (Sphaerotheca pannosa), and downy mildew (Peronospora sparsa);

Diseases of chrysanthemum and asteraceous vegetables: downy mildew (Bremia lactucae), leaf blight (Septoria chrysanthemi-indici), and white rust (Puccinia horiana);

Various crops diseases: diseases caused by Pythium fungus (Pythium aphanidermatum, Pythium debarianum, Pythium graminicola, Pythium irregulare, Pythium ultimum), gray mold (Botrytis cinerea), and sclerotinia rot (Sclerotinia sclerotiorum);

Japanese radish diseases: alternaria leaf spot (Alternaria brassicicola);

Turfgrass diseases: dollar spot (Sclerotinia homoeocarpa), and brown patch and large patch (Rhizoctonia solani);

Banana diseases: sigatoka disease (Mycosphaerella fijiensis, Mycosphaerella musicola);

Sunflower diseases: downy mildew (Plasmopara halstedii);

Seed diseases or diseases in the early stage of the growth of various crops caused by the fungi of genera of Aspergillus, Penicillium, Fusarium, Gibberella, Tricoderma, Thielaviopsis, Rhizopus, Mucor, Corticium, Phoma, Rhizoctonia, Diplodia, and the others; and

Viral diseases of various crops mediated by genera of Polymixa, Olpidium, and the others.

Examples of a plant to which the composition of the present invention can be applied include the following plants, which is not limited thereto.

Crops: corn, rice, wheat, barley, rye, oat, sorghum, cotton, soybean, adzuki bean, kidney bean, peanut, buckwheat, beet, rapeseed, sunflower, sugar cane, tobacco, etc.;

Vegetables: solanaceous vegetables (eggplant, tomato, pimento, pepper, potato, etc.), cucurbitaceous vegetables (cucumber, pumpkin, zucchini, water melon, melon, squash, etc.), cruciferous vegetables (Japanese radish, white turnip, horseradish, kohlrabi, Chinese cabbage, cabbage, leaf mustard, broccoli, cauliflower, etc.), asteraceous vegetables (burdock, crown daisy, artichoke, lettuce, etc.), liliaceous vegetables (welsh onion, onion, garlic, asparagus), apiaceous vegetables (carrot, parsley, celery, parsnip, etc.), chenopothaceous vegetables (spinach, Swiss chard, etc.), lamiaceous vegetables (Perilla frutescens, mint, basil, etc.), strawberry, sweet potato, glutinous yam, eddoe, etc.;

Flowers;

Foliage plants;

Turf grasses;

Fruits: pomaceous fruits (apple, pear, Japanese pear, Chinese quince, quince, etc.), stone fleshy fruits (peach, plum, nectarine, Prunus mume, cherry fruit, apricot, prune, etc.), citrus fruits (Citrus unshiu, orange, lemon, lime, grapefruit, etc.), nuts (chestnuts, walnuts, hazelnuts, almond, pistachio, cashew nuts, macadamia nuts, etc.), berries (blueberry, cranberry, blackberry, raspberry, etc.), grapes, Japanese persimmon, olive, loquat, banana, coffee, date palm, coconuts, etc.,

trees other than fruit trees: tea, mulberry, flowering trees, roadside trees (ash, birch, dogwood, eucalyptus, ginkgo biloba, lilac, maple, Quercus, poplar, cercis, Liquidambar formosana, plane tree, zelkova, Japanese arborvitae, fir tree, hemlock, juniper, Pinus, Picea, and Taxus cuspidata), etc.

Varieties of the plants described above are not particularly limited as long as they are generally cultivated varieties.

The plants described above may be plants that can be produced by natural breeding, plants that can be generated by mutation, F1 hybrid plants, or transgenic plants (also referred to as genetically modified plants). These plants generally have characteristics such as tolerance to herbicides, accumulation of toxic substances against pests (also referred to as pest resistance), suppression of sensitivity to diseases (also referred to as disease resistance), increase of yield potential, improvement in resistance to biotic and abiotic stress factors, quality modification of the product (for example, increase or decrease in content of components, change in composition, and improvement in storage stability or processability) and so on.

Examples of embodiments of the composition of the present invention include the followings.

The composition of the present invention wherein a combination of the present compound 1 and the present compound 2 is any of the following combinations:

a composition comprising the present compound 1 and the present compound 2 wherein a weight ratio of the present compound 1 to the present compound 2 is within range of 1: 0.0125 to 1: 500;

a composition comprising the present compound 1 and the present compound 2 wherein a weight ratio of the present compound 1 to the present compound 2 is within range of 1: 0.025 to 1: 100; and

a composition comprising the present compound 1 and the present compound 2 wherein a weight ratio of the present compound 1 to the present compound 2 is within range of 1: 0.1 to 1: 10.

The method for controlling plant diseases of the present invention (hereinafter, referred to as the control method of the present invention) is carried out by applying each of an effective amount of the present compound 1 and the present compound 2 to a plant or a soil for cultivating the plant.

Examples of the plant include a whole plant and specific parts of the plant. Examples of the specific parts of the plant include stem and leaves, flowers, ears, fruits, trunks, branches, crowns, seeds, bulbs and seedlings. The bulbs as used herein means bulbs, corms, rhizomes, rootstocks, tuberas, tuberous roots, and rhizophores.

In the control method of the present invention, a weight ratio of an application amount of the present compound 1 to an application amount of the present compound 2 is within a range of usually 1: 0.0125 to 1: 500, preferably 1: 0.025 to 1: 100, more preferably 1: 0.1 to 1: 10.

In the control method of the present invention, the present compound 1 and the present compound 2 may be applied separately around the same period to a plant or a soil for cultivating the plant, but are usually applied as a composition of the present invention in view of a convenience on applying.

In the control method of the present invention, examples of the method for applying the present compound 1 and the present compound 2 include a foliage treatment, a soil treatment, a root treatment, and a seed treatment.

Examples of the foliage treatment include a method of applying the composition of the present invention to a surface of the plant to be cultivated by a foliage spray or a trunk spray.

Examples of the root treatment include a method of soaking a whole plant or a root of the plant into a medical solution comprising the present compound 1 and the present compound 2, and a method of attaching a solid formulation comprising the present compound 1, the present compound 2 and a solid carrier to the root of the plant.

Examples of the soil treatment include soil broadcast, soil incorporation, and irrigation of the medical solution to a soil.

Examples of the seed treatment include an application of the composition of the present invention to seeds of the plant to be prevented from plant diseases. Specific examples thereof include a spray treatment by spraying a suspension of the composition of the present invention in a mist form to a surface of a seed, a smear treatment by smearing the wettable powders, the emulsifiable concentrate or the flowable formulation of the composition of the present invention with added by small amounts of water or as itself to a seed, an immerse treatment of a seed into a solution of the composition of the present invention for a given time, a film-coating treatment, and a pellet-coating treatment. An application of the composition of the present invention to a bulb of a plant can be also carried out in the same manner to the above described spray treatment or the smear treatment.

In the control method of the present invention, the application amounts of the present compound 1 and the

present compound 2 may be varied depending on, for example, a kind of plant to be applied, a kind or frequency of an occurrence of a plant disease as a control subject, a dosage form, an application period, an application method, an application site, and a climate condition and so on. In the case of the application to a foliage of the plant or a soil for cultivating the plant, the total amount of the present compound 1 and the present compound 2, is within a range of usually 1 to 500 g, preferably 2 to 200 g and more preferably 10 to 100 g per 1000 $m^2$. Each dose of the present compound 1 and the present compound 2 in an application to seeds is within a range of usually 0.001 to 10 g as the total amount of the present compound 1 and the present compound 2, preferably 0.01 to 1 g per 1 kg of seeds.

The emulsifiable concentrates, the wettable powders, or the flowable formulation and the others are usually applied by diluting them with water, and then spraying the resultant. In this case, the concentrations of the present compound 1 and the present compound 2 is within a range of usually 0.0005 to 2 % by weight and preferably 0.005 to 1 % by weight as the total concentrations of the present compound 1 and the present compound 2. The dust formulation or the granular formulation, and the others are usually as itself applied without diluting them.

## EXAMPLES

Hereinafter, the present invention is described in more detail below by the following examples including Formulation Examples and Test Examples, however, the present invention should not be construed to be limited thereto.

Formulation Examples are shown below. It is to be noted that the term of "part" refers to "part by weight" in the Formulation

### Formulation Example 1

Five (5) parts of the present compound 1, 5 parts of the present compound 2, 35 parts of a mixture of white carbon and polyoxyethylene alkyl ether sulfate ammonium salt (1 : 1 by weight ratio) and 55 parts of water are mixed, and the resulting solution is then subjected to fine grinding according to a wet grinding method to obtain a flowable formulation.

### Formulation Example 2

Ten (10) parts of the present compound 1, 5 parts of the present compound 2, 1.5 parts of sorbitan trioleate, and 28 parts of a mixture of polyvinyl alcohol and water (containing 2 parts of polyvinyl alcohol) are mixed, and the mixed solution is then subjected to fine grinding according to a wet grinding method. Thereafter, 45.50 parts of a mixture of xanthan gum, aluminum magnesium silicate and water (containing 0.05 parts of xanthan gum and 0.1 parts of aluminum magnesium silicate) is added to the resultant, and 10 parts of propylene glycol is further added thereto, and the resulting mixture is blended by stirring, to obtain a flowable formulation.

### Formulation Example 3

Ten (10) parts of the present compound 1, 40 parts of the present compound 2, 3 parts of calcium lignin sulfonate, 2 parts of sodium lauryl sulfate and 45 parts of synthetic hydrous silicon oxide are fully crushed and mixed thoroughly to obtain wettable powders.

### Formulation Example 4

Five (5) parts of the present compound 1, 5 parts of the present compound 2, 14 parts of polyoxyethylene styrenated phenyl ether, 6 parts of calcium dodecylbenzene sulfonate and 70 parts of xylene are mixed thoroughly to obtain formulations.

Next, Test Examples are shown below.

### Test Example 1

A medicine solution is prepared by mixing the present compound 1 and the present compound 2, followed by adding dimethylsulfoxide thereto so that each of concentrations of the present compound 1 and the present compound 2 is 10 ppm. The medicine solution is dispensed into each well of a titer plate (96 wells) in 1 μl portion thereof per well. Thereto is then dispensed 150 μL of a potato dextrose broth medium (PDB medium) to which condia of wheat septoria leaf blotch fungi are inoculated in advance. The plate is cultured at 18°C for 4 days, thereby allowing the wheat septoria leaf blotch fungi to undergo proliferation, and the absorbance at 550 nm of sample in each well of the titer plate is then measured to examine a degree of growth of the wheat septoria leaf blotch fungi. The efficacy is calculated on the basis

of the determined degree of growth of the treated group and the untreated group, respectively, by the below-mentioned "Equation 1". From the test results, a high efficacy is acknowledged.

"Equation 1"

$$\text{Efficacy} = 100 \times (X - Y) / X$$

wherein

X: Degree of growth of fungus in the untreated group
Y: Degree of growth of fungus in the treated group

Test Example 2

A flowable formulation containing the present compound 1 was prepared by mixing 15 parts of the present compound 1, 35 parts of a mixture of white carbon and polyoxyethylene alkyl ether sulfate ammonium salt (1 : 1 by weight ratio) and 60 parts of water, and the mixture was then finely-ground by according to a wet grinding method. Separately, a flowable formulation containing the present compound 2 was prepared in the same manner described above except that the present compound 2 was used instead of the present compound 1. The flowable formulation containing the present compound 1 and the flowable formulation containing the present compound 2 were respectively diluted with water, and mixed each other to obtain a diluted solution. Each concentration of the respective compounds in the diluted solution was set to the values described in Table 1.

A plastic pot was filled with soil, and thereto wheat (cultivar; Shirogane) was seeded, and the plants were grown for 10 days in a greenhouse. The above diluted solution was sprayed to foliar parts such that the diluted solution was sprayed to foliar parts so as to adhere adequately onto the leaf surfaces of the above wheat. After spraying the dilute solution, the plants were air-dried. Then, an aqueous suspension containing spores of wheat brown rust (Puccinia triticina) was inoculated by spraying thereto. After the inoculation, the plants were placed at 23°C under humid condition for 1 day, and were then placed under lighting for 10 days. Thereafter, a lesion area (hereinafter referred to as "lesion area of a treated group") was examined.

Whereas, in untreated group, the same procedure as in the treated group except that the present compound 1 and the present compound 2 were not applied was carried out, and then a lesion area caused by wheat brown rust (hereinafter referred to as "lesion area of a untreated group") was examined.

From each of the lesion area of the treated group and the untreated group, respectively, the efficacy of the treated group was calculated by the below-mentioned "Equation 2".

The results are shown in Table 1.

"Equation 2"

$$\text{Efficacy} = [1- (\text{lesion area of the treated group}) / (\text{lesion area of the untreated group})] \times 100$$

Table 1

| Test compounds | Each concentrations in Diluted Solution (ppm) | Efficacy (%) |
|---|---|---|
| Present compound 1 + Present compound 2 | 0.2 + 0.02 | 100 |
| Present compound 1 + Present compound 2 | 0.002 + 0.02 | 100 |

**Claims**

**1.** A composition for controlling a plant disease comprising a compound represented by formula (1):

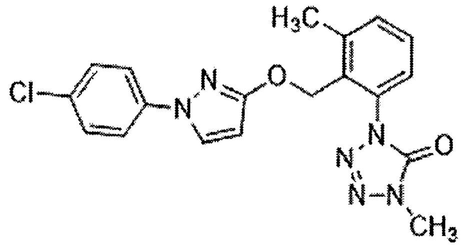 (1)

and a compound represented by formula (2):

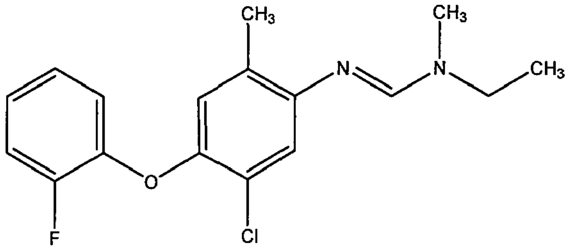 (2)

.

2. The composition according to claim 1, wherein a weight ratio of the compound represented by formula (1) to the compound represented by formula (2) is within a range of 1:0.0125 to 1:500.

3. A method for controlling a plant disease comprising a step of applying each of an effective amount of a compound represented by formula (1):

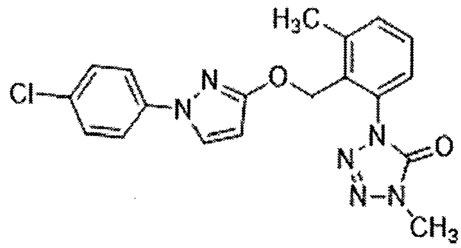 (1)

and a compound represented by formula (2):

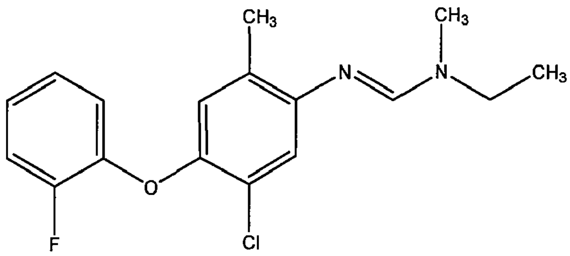 (2)

to a plant or a soil for cultivating the plant.

4. A method for controlling a plant disease comprising a step of applying each of an effective amount of a compound represented by formula (1):

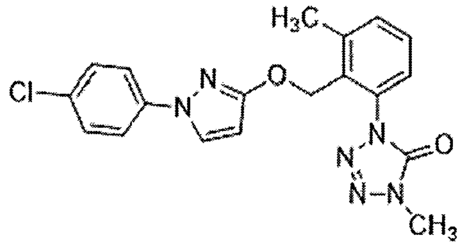 (1)

and a compound represented by formula (2):

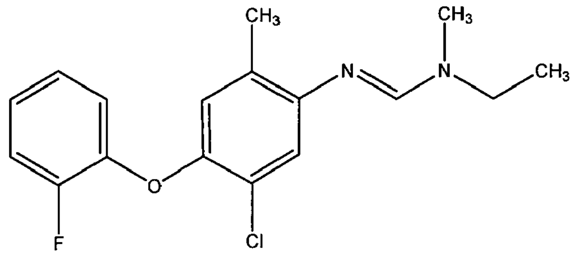 (2)

to a seed.

**5.** A use of a combination of a compound represented by formula (1) :

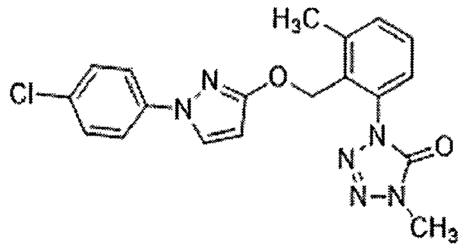 (1)

and a compound represented by formula (2):

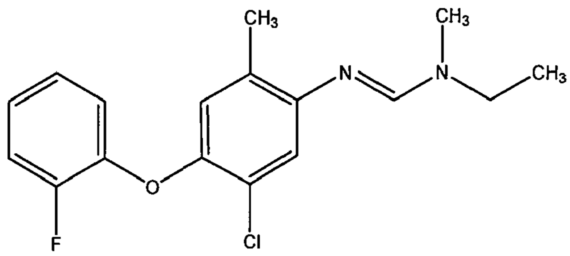 (2)

.

Europäisches Patentamt
European Patent Office
Office européen des brevets

# EUROPEAN SEARCH REPORT

Application Number
EP 19 19 4261

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2015/051171 A1 (YOSHIMOTO YUYA [JP] ET AL) 19 February 2015 (2015-02-19)<br>* paragraphs [0002], [0006] - [0169] *<br>* paragraphs [5054] - [5055]; compound 12 *<br>* examples 2, 4, 7-8, 11, 13, 16-17, 20, 22, 24, 26, 28, 30 *<br>----- | 1-5 | INV.<br>A01N43/713<br>A01N37/52<br>A01N25/00<br>A01P3/00 |
| Y | WO 2016/091675 A1 (BASF SE [DE])<br>16 June 2016 (2016-06-16)<br>* abstract *<br>* page 1, lines 1-38; compounds I-3 *<br>* claims 1-8 *<br>----- | 1-5 | |
| A | Anon.: "Sumitomo Chemical and BASF take major step in global development of a novel fungicide",<br>,<br>22 June 2018 (2018-06-22), XP55627594,<br>Retrieved from the Internet:<br>URL:file:///C:/Users/mh51903/Downloads/P240e_JointRelease_PavectoFungicide.pdf<br>[retrieved on 2019-10-01]<br>* page 1 *<br>-----<br>-/-- | 1-5 | TECHNICAL FIELDS SEARCHED (IPC)<br>A01N |

2

The present search report has been drawn up for all claims

| Place of search | Date of completion of the search | Examiner |
|---|---|---|
| Munich | 4 October 2019 | Hateley, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches Patentamt
European Patent Office
Office européen des brevets

# EUROPEAN SEARCH REPORT

Application Number
EP 19 19 4261

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,P | HARUKA SUEMOTO ET AL: "Metyltetraprole, a novel putative complex III inhibitor, targets known QoI-resistant strains of Zymoseptoria tritici and Pyrenophora teres : Metyltetraprole targets QoI-resistant Zymoseptoria tritici and Pyrenophora teres", PEST MANAGEMENT SCIENCE, vol. 75, no. 4, 17 January 2019 (2019-01-17), pages 1181-1189, XP55627605, BOGNOR REGIS; GB ISSN: 1526-498X, DOI: 10.1002/ps.5288 * the whole document * ----- | 1-5 | |
| Y,D | WO 2016/202688 A1 (BAYER CROPSCIENCE AG [DE]) 22 December 2016 (2016-12-22) * page 1, lines 1-6 * * page 2, line 15 - page 4, line 7 * * page 46; compounds I-01 * * page 57,; compounds I-01 * ----- | 1-5 | |
| | | | TECHNICAL FIELDS SEARCHED (IPC) |
| Y | WO 2018/050508 A1 (BASF SE [DE]) 22 March 2018 (2018-03-22) * page 1, line 5 - page 2, line 11 * * page 4, lines 10-11 * * pages 16-18; claims 1-12; tables 1-3; compound IIb * ----- | 1-5 | |
| X | WO 2018/109002 A1 (BAYER CROPSCIENCE AG [DE]; BAYER AG [DE]) 21 June 2018 (2018-06-21) * abstract * * page 3, line 1 - page 8, line 18 * * page 10, lines 1-21 * * page 32, lines 20-21; compound 3.030 * ----- | 1-5 | |

The present search report has been drawn up for all claims

2

| Place of search | Date of completion of the search | Examiner |
|---|---|---|
| Munich | 4 October 2019 | Hateley, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 2 of 2

# ANNEX TO THE EUROPEAN SEARCH REPORT ON EUROPEAN PATENT APPLICATION NO. EP 19 19 4261

This annex lists the patent family members relating to the patent documents cited in the above-mentioned European search report. The members are as contained in the European Patent Office EDP file on
The European Patent Office is in no way liable for these particulars which are merely given for the purpose of information.

04-10-2019

| Patent document cited in search report | Publication date | Patent family member(s) | Publication date |
|---|---|---|---|
| US 2015051171 A1 | 19-02-2015 | AR 090862 A1 | 10-12-2014 |
| | | AU 2013253325 A1 | 25-09-2014 |
| | | BR 112014026457 A2 | 27-06-2017 |
| | | CA 2866815 A1 | 31-10-2013 |
| | | CL 2014002879 A1 | 30-01-2015 |
| | | CN 104245689 A | 24-12-2014 |
| | | CO 7101248 A2 | 31-10-2014 |
| | | EP 2841429 A1 | 04-03-2015 |
| | | IL 235265 A | 30-04-2017 |
| | | JP 5943163 B1 | 29-06-2016 |
| | | JP 6107377 B2 | 05-04-2017 |
| | | JP 2014080415 A | 08-05-2014 |
| | | JP 2016128511 A | 14-07-2016 |
| | | KR 20150008863 A | 23-01-2015 |
| | | MX 361178 B | 29-11-2018 |
| | | PH 12014502117 A1 | 10-12-2014 |
| | | RU 2014143025 A | 20-06-2016 |
| | | TW 201402566 A | 16-01-2014 |
| | | UA 115661 C2 | 11-12-2017 |
| | | US 2015051171 A1 | 19-02-2015 |
| | | VN 40839 A1 | 26-01-2015 |
| | | WO 2013162072 A1 | 31-10-2013 |
| | | ZA 201406675 B | 30-03-2016 |
| WO 2016091675 A1 | 16-06-2016 | NONE | |
| WO 2016202688 A1 | 22-12-2016 | EP 3307706 A1 | 18-04-2018 |
| | | US 2018186724 A1 | 05-07-2018 |
| | | WO 2016202688 A1 | 22-12-2016 |
| WO 2018050508 A1 | 22-03-2018 | BR 112019003759 A2 | 21-05-2019 |
| | | CN 109788758 A | 21-05-2019 |
| | | EP 3512339 A1 | 24-07-2019 |
| | | WO 2018050508 A1 | 22-03-2018 |
| WO 2018109002 A1 | 21-06-2018 | AR 110367 A1 | 20-03-2019 |
| | | UY 37521 A | 31-07-2018 |
| | | WO 2018109002 A1 | 21-06-2018 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018162636 A
- JP 2014080415 A
- WO 2016202688 A1